# EUROPÄISCHE PATENTSCHRIFT

(11) **EP 2 842 416 B1**
(45) Veröffentlichungstag und Bekanntmachung des Hinweises auf die Patenterteilung: **07.03.2018**
(21) Anmeldenummer: 14182124.9
(22) Anmeldetag: 25.08.2014
(51) Int. Cl.: A01K 1/02

(54) **Abferkelbucht mit einem Abferkelkäfig**
Farrowing pen with a farrowing cage
Loge de mise bas dotée de cage de mise bas

(30) Priorität: 03.09.2013 AT 5011613 U
(43) Veröffentlichungstag der Anmeldung: 04.03.2015
(73) Patentinhaber: STEWA Steinhuber GmbH, 4642 Sattledt (AT)
(72) Erfinder: Steinhuber, Walter, 4642 Sattledt (AT)
(74) Vertreter: Patentanwaltskanzlei Hübscher

(56) Entgegenhaltungen:
- CH-A5- 685 089
- DE-A1- 2 431 564
- DE-A1- 2 927 523
- DE-A1- 3 124 347
- DE-A1- 4 109 748
- FR-A1- 2 922 409

## Beschreibung

Die Erfindung bezieht sich auf eine Abferkelbucht mit einem Abferkelkäfig, der an einem einen Futtertrog aufnehmenden Kopfrahmen zwei um vertikale Achsen schwenkverstellbar gelagerte Seitengitter aufweist, die auf der dem Kopfrahmen gegenüberliegenden Käfigseite einen Käfigabschluss aus zwei in Längsrohren der Seitengitter verstellbar geführten Abschlussgittern tragen.

Um eine Gefährdung der Ferkel bzw. des Personals durch die Muttersau auszuschließen, werden in den Abferkelbuchten Abferkelkäfige eingesetzt, die die Muttersau während der Geburtsvorbereitungen, des Geburtsvorgangs und der Säugezeit festhalten. Im Übrigen soll sich die Muttersau weitgehend frei innerhalb der Abferkelbucht bewegen können. Zu diesem Zweck sind diagonal zur Abferkelbucht verlaufende Abferkelkäfige bekannt (DE 29 27 523 A1), die einen in einem Eck der Abferkelbucht angeordneten, mit einem Futtertrog versehenen Kopfrahmen aufweisen, an dem um vertikale Achsen verschwenkbare Seitengitter des Abferkelkäfigs angelenkt sind. Da diese Seitengitter auf der dem Kopfrahmen gegenüberliegenden Seite einen Käfigabschluss in Form zweier quer zu den zugehörigen Seitenwänden verlaufender Abschlussgitter bilden, kann durch ein Auseinanderschwenken der Seitengitter der Käfigabschluss für den Durchtritt einer Muttersau geöffnet werden. Nach einem Ausschwenken gegen die an das Eck mit dem Kopfrahmen anschließenden Umfangswände der Abferkelbucht geben die Seitengitter des Abferkelkäfigs außerdem den Zugang der Muttersau zu einem weiten Bereich der Abferkelbucht frei, wozu noch kommt, dass die Aufnahmelänge des Abferkelkäfigs an die Größe der jeweiligen Muttersau angepasst werden kann, indem die Abschlussgitter in Längsrohren der Seitengitter verschiebbar geführt und in verschiedenen Verschiebestellungen durch einen Riegelbolzen verriegelbar sind. Trotz der durch eine solche Konstruktion erzielbaren Vorteile ergeben sich hinsichtlich der Bedienung des Abferkelkäfigs durch die verschwenkbaren Seitengitter sowie bezüglich der Freigabe der Abferkelbucht für die Muttersau Einschränkungen, insbesondere wenn es gilt, für die Muttersau einen vorgegebenen Freiraum innerhalb der Abferkelbucht sicherzustellen, ohne den Platzbedarf für die Abferkelbucht vergrößern zu müssen.

Um für die Muttersau einen größeren Freiraum zu ermöglichen, ist es außerdem bekannt (CH 685 089 A5), nicht die von einem Kopfrahmen ausgehenden Seitengitter, sondern an teleskopartig verlängerbaren Abschnitten der parallelen Seitengittern zwei Türflügel anzulenken, von denen einer in der Schließstellung eine gerade Verlängerung des zugehörigen Seitengitterabschnitts bildet, während der andere Türflügel abgewinkelt ist, um mit dem abgewinkelten Querschenkel den Abstand zwischen den Seitengittern überbrücken zu können. Das Verschwenken nicht der Seitengitter, sondern einer zweiflügeligen Tür am Ende der Seitengitter bringt allerdings keinen größeren Freiraum für die Muttersau mit sich.

Der Erfindung liegt somit die Aufgabe zugrunde, eine Abferkelbucht mit einem Abferkelkäfig so auszubilden, dass das durch die Abferkelbucht vorgegebene Platzangebot trotz des Platzbedarfs für den Abferkelkäfig vorteilhaft für den der Muttersau zur Verfügung stellbaren Freiraum genützt werden kann, und zwar unter Wahrung einfacher Handhabungsbedingungen für den Abferkelkäfig.

Ausgehend von einer Abferkelbucht der eingangs geschilderten Art löst die Erfindung die gestellte Aufgabe dadurch, dass die Abschlussgitter um vertikale Schwenkachsen schwenkverstellbare, symmetrische Türflügel bilden, die bei geschlossenem Käfigabschluss in der Draufsicht entlang eines zwischen den Seitengittern nach außen vorgewölbten Abschlussbogens verlaufen.

Durch die Ausbildung der Abschlussgitter als Türflügel, die um vertikale Schwenkachsen verstellt werden können, wird zunächst die Handhabung des Abferkelkäfigs vereinfacht, weil für das Bedienen des Käfigabschlusses nicht mehr die gesamten Seitengitter verlagert werden müssen. Darüber hinaus kann das durch die Abferkelbucht bestimmte Platzangebot besser für den Freiraum der Muttersau genützt werden. Die als Türflügel ausgebildeten Abschlussgitter können ja aufgrund ihrer Verschwenkbarkeit dem Wandverlauf der Abferkelbucht folgen und schränken demnach den Bewegungsfreiraum für die Muttersau nicht mehr ein, sodass sich diesbezüglich besonders vorteilhafte Konstruktionsvoraussetzungen ergeben, zumal die Türflügel bei geschlossenem Käfigabschluss in der Draufsicht entlang eines zwischen den Seitengittern nach außen vorgewölbten Abschlussbogens verlaufen, weil in diesem Fall die Grundfläche des Abferkelkäfigs im Bereich des Käfigabschlusses an den Platzbedarf der Muttersau angepasst wird, und zwar für alle einstellbaren Käfiglängen.

.Die Verriegelung der Türflügel des Abferkelkäfigs kann grundsätzlich durch unterschiedliche Konstruktionen sichergestellt werden. Einfache Handhabungsbedingungen ergeben sich allerdings mit einem geringen Konstruktionsaufwand, wenn die auf einem Träger des Käfigabschlusses drehbar gelagerten Türflügel einen zu ihrer Schwenkachse parallelen, federbelasteten Riegelbolzen aufweisen, der mit einer dem Träger zugeordneten Rastscheibe zusammenwirkt. Der im Verriegelungssinn federbelastete Riegelbolzen gleitet nach seinem Ausziehen aus einer Rastausnehmung der Rastscheibe bei einem Verschwenken des Türflügels auf der Rastscheibe, bis er beim Erreichen der nächsten Rastausnehmung wieder durch seine Federbelastung in die Verriegelungsstellung verlagert wird. Zum Lösen der Verriegelungsstellung ist der Riegelbolzen lediglich entgegen der Federbelastung aus der Rastausnehmung zu ziehen.

Um die Abferkelbucht der Muttersau weitgehend freizugeben, werden die Seitengitter des Abferkelkäfigs gegen die angrenzenden Wandabschnitte der Abferkelbucht auseinandergeschwenkt. Zum Festhalten der Seitengitter in dieser Öffnungsstellung können die an die ausgeschwenkten Seitengitter angrenzenden Wandabschnitte der Abferkelbucht Verriegelungselemente für die ausgeschwenkten Seitengitter des Abferkelkäfigs aufweisen.

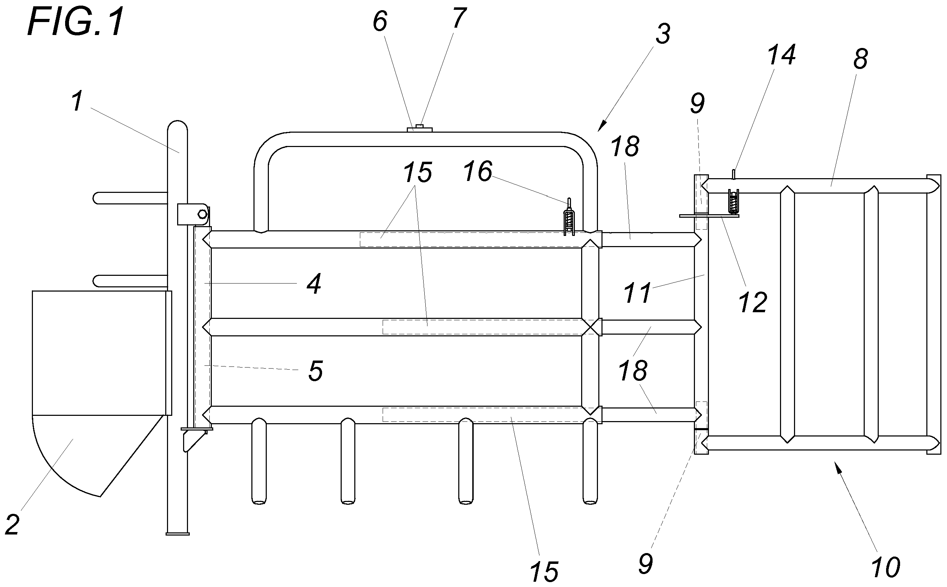

In der Zeichnung ist der Erfindungsgegenstand beispielsweise dargestellt. Es zeigen
- Fig. 1: einen Abferkelkäfig gemäß der Erfindung in einer vereinfachten Seitenansicht,
- Fig. 2: diesen Abferkelkäfig in einer Draufsicht und
- Fig. 3 und 4: eine erfindungsgemäße Abferkelbucht mit einem Abferkelkäfig gemäß den Fig. 1 und 2 in verschiedenen Gebrauchsstellungen in einem kleineren Maßstab.

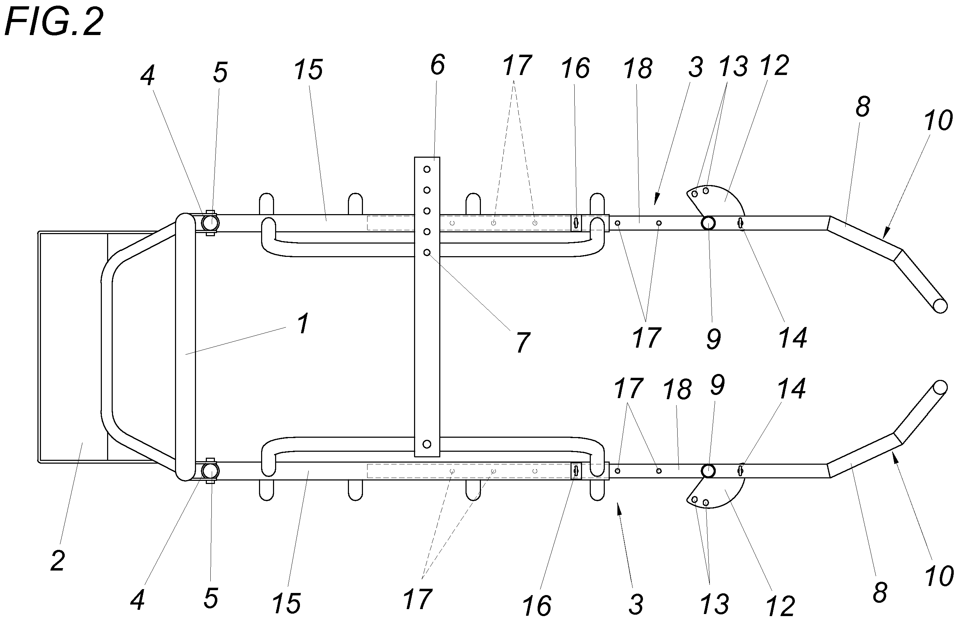

Der Abferkelkäfig gemäß dem dargestellten Ausführungsbeispiel setzt sich aus einem portalartigen Kopfrahmen 1 mit einem Futtertrog 2 und zwei Seitengittern 3 zusammen, die an den Stehern des portalartigen Kopfrahmens 1 um je eine vertikale Achse schwenkverstellbar angelenkt sind. Zu diesem Zweck bilden die Seitengitter 3 an ihren dem Kopfrahmen 1 zugekehrten Enden je eine Lagerhülse 4, die auf einer den Stehern des Kopfrahmens 1 zugehörigen Lagerachse 5 gelagert sind. Die gegenseitige Schwenkstellung der Seitengitter 3 wird durch eine an einem der Seitengitter 3 vorgesehene Verriegelungsbrücke 6 gesichert, die mit dem anderen Seitengitter 3 verriegelt werden kann, beispielsweise mit Hilfe eines Riegelbolzens 7, wie dies in der Fig. 2 angedeutet ist. Auf der dem Kopfrahmen 1 gegenüberliegenden Käfigseite sind die Seitengitter 3 mit Abschlussgittern 8 versehen, die um vertikale Schwenkachsen 9 verschwenkbare Türflügel 10 bilden. Diese Türflügel 10 ergeben in der Schließstellung in der Draufsicht gemäß der Fig. 2 einen nach außen vorgewölbten Abschlussbogen zwischen den Seitengittern 3, sodass dieser Käfig-abschluss in vorteilhafter Weise die anatomischen Verhältnisse einer aufzunehmenden Muttersau berücksichtigt. Die Türflügel 10 sind auf einem vertikalen Träger 11 gelagert, der eine Rastscheibe 12 mit Rastausnehmungen 13 für einen im Verriegelungssinn federbelasteten Riegelbolzen 14 trägt, der dem Türflügel 10 zugeordnet ist, sodass die Türflügel 10 in den durch die Rastausnehmungen 13 vorgegebenen, unterschiedlichen Schwenkstellungen gegenüber den Seitengittern 3 verriegelt werden können.

Zur Einstellung unterschiedlicher Käfiglängen ist der Träger 11 mit den Abschlussgittern 8 in Längsrohren 15 der Seitengitter 3 längsverstellbar geführt. Die jeweiligen Verschiebestellungen werden durch im Verriegelungssinn federbelastete Riegelbolzen 16 gesichert, die in Rastöffnungen 17 der in den Längsrohren 15 verschiebbar geführten Längsholme 18 eingreifen.

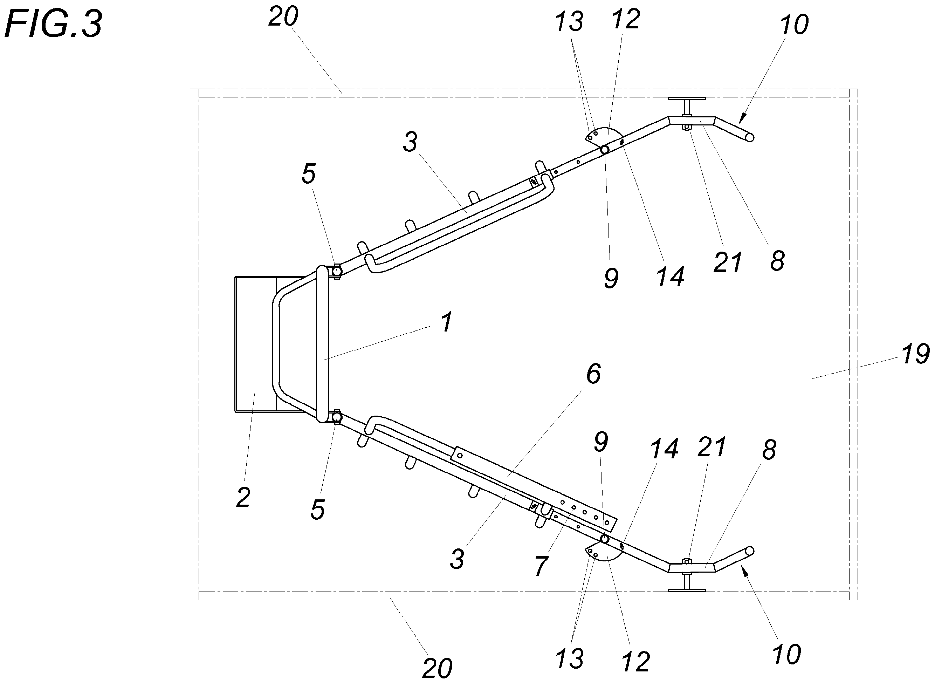

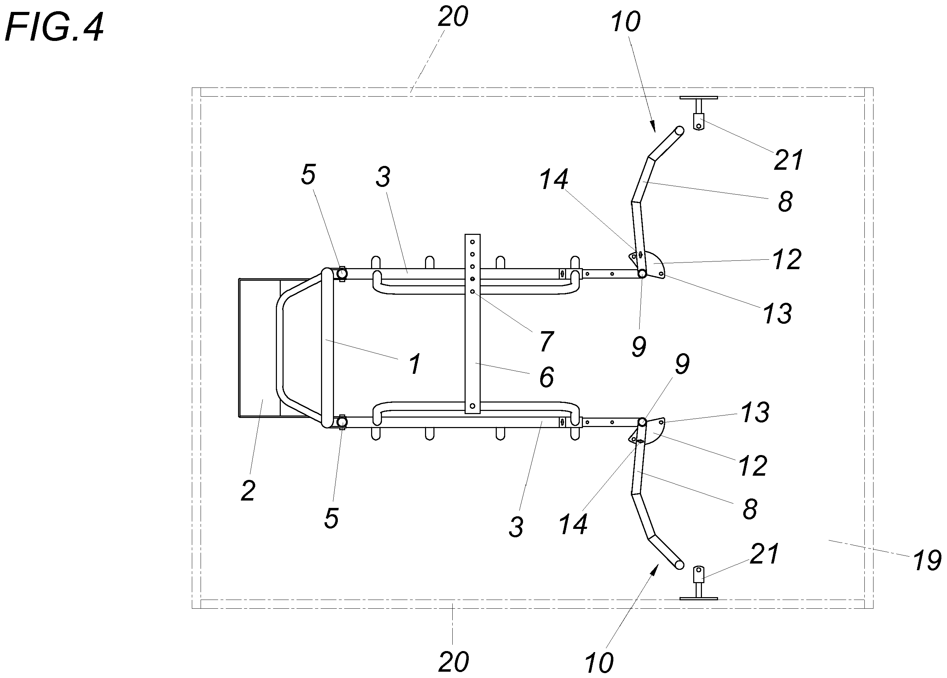

Aufgrund der durch die Einstellung der Käfiglänge und der Bogenform der Abschlussgitter 8 bedingten Anpassung an die jeweils im Abferkelkäfig aufzunehmende Muttersau wird in Verbindung mit der Möglichkeit, einerseits die Türflügel 10 des Käfigabschlusses gegenüber den Seitengittern 3 und anderseits die Seitengitter 3 gegenüber dem Kopfrahmen 1 um vertikale Achsen zu verschwenken, eine vorteilhafte Ausnützung des durch eine Abferkelbucht 19 gegebenen Platzangebots gewährleistet, wie dies beispielsweise in den Fig. 3 und 4 angedeutet ist. Werden die Seitengitter 3 gemäß der Fig. 3 mit in der Schließstellung verriegelten Türflügeln 10 gegen die Seitenwände 20 der Abferkelbucht 19 auseinandergeschwenkt, so ergibt sich für die Muttersau innerhalb der Abferkelbucht 19 ein vergleichsweise großer, durch den Abferkelkäfig begrenzter Bewegungsfreiraum, der im Bedarfsfall auf den Bereich des geschlossenen Abferkelkäfigs in einfacher Weise begrenzt werden kann, weil ja zu diesem Zweck lediglich die Seitengitter 3 wieder in die eingeschwenkte Ausgangslage zurückgeschwenkt und über die Verriegelungsbrücke 6 miteinander verbunden werden müssen. Um die ausgeschwenkte Stellung der Seitengitter 3 zu fixieren, können an den an die ausgeschwenkten Seitengitter 3 angrenzenden Wandabschnitten der Abferkelbucht 19 Verriegelungselemente 21 für die ausgeschwenkten Seitengitter 3 vorgesehen sein. In der ausgeschwenkten Stellung der Seitengitter 3 kann die Verriegelungsbrücke 6 gegen die Seitengitter 3 eingeschwenkt werden, wie dies in der Fig. 3 angedeutet ist. In ähnlicher Weise können auch die Verriegelungselemente 21 gegen die Seitenwände 20 verschwenkt werden, um bei Nichtgebrauch nicht in den Bewegungsfreiraum der Abferkelbucht 19 vorzustehen.

In der Fig. 4 ist eine weitere mögliche Stellung des Abferkelkäfigs innerhalb der Abferkelbucht 19 dargestellt, wobei der Bewegungsraum der Muttersau in der Abferkelbucht gegenüber der Stellung des Abferkelkäfigs gemäß der Fig. 3 eingeschränkt ist. Die nach außen gegen die Seitenwände 20 der Abferkelbucht 19 ausgeschwenkten und in dieser Schwenkstellung verriegelten Türflügel 10 begrenzen den Bewegungsfreiraum für die Muttersau auf einen vergleichsweise schmalen Zugangsbereich zum Abferkelkäfig.

Es braucht wohl nicht besonders hervorgehoben zu werden, dass nicht nur die gezeichnete Mittelstellung des Abferkelkäfigs innerhalb der Abferkelbucht 19 möglich ist. Die Vorteile der mehrfachen Einstellung des Abferkelkäfigs durch ein Verschwenken der Seitengitter 3 und der Türflügel 10 in Verbindung mit der möglichen Längenanpassung des Abferkelkäfigs können selbstverständlich auch bei einer diagonalen Anordnung des Abferkelkäfigs in der Abferkelbucht 19 genützt werden.

## Patentansprüche

1. Abferkelbucht (19) mit einem Abferkelkäfig, der an einem einen Futtertrog (2) aufnehmenden Kopfrahmen (1) zwei um vertikale Achsen (5) schwenkverstellbar gelagerte Seitengitter (3) aufweist, die auf der dem Kopfrahmen (1) gegenüberliegenden Käfigseite einen Käfigabschluss aus zwei in Längsrohren (15) der Seitengitter (3) verstellbar geführten Abschlussgittern (8) tragen, **dadurch gekennzeichnet, dass** die Abschlussgitter (8) um vertikale Schwenkachsen (9) schwenkverstellbare, symmetrische Türflügel (10) bilden, die bei geschlossenem Käfigabschluss in der Draufsicht entlang eines zwischen den Seitengittern (3) nach außen vorgewölbten Abschlussbogens verlaufen.

2. Abferkelbucht (19) nach Anspruch 1, **dadurch gekennzeichnet, dass** die auf einem Träger (11) des Käfigabschlusses drehbar gelagerten Türflügel (10) einen zu ihrer Schwenkachse (9) parallelen, federbelasteten Riegelbolzen (14) aufweisen, der mit einer dem Träger (11) zugeordneten Rastscheibe (12) zusammenwirkt.

3. Abferkelbucht (19) nach Anspruch 1 oder 2, **dadurch gekennzeichnet, dass** die an die ausgeschwenkten Seitengitter (3) angrenzenden Wandabschnitte der Abferkelbucht (19) Verriegelungselemente (21) für die ausgeschwenkten Seitengitter (3) des Abferkelkäfigs aufweisen.

## Claims

1. Farrowing pen (19) having a farrowing cage which, on a head frame (1) receiving a feed trough, comprises two side gratings (3) which are mounted to be pivotable about vertical axes (5) and which, on the cage side opposite the head frame (1), support a cage closure consisting of two closure gratings (8) displaceably guided in longitudinal tubes (15) of the side gratings (3), **characterised in that** the closure gratings (8) form symmetrical door leaves (10) which can be pivoted about vertical pivot axes (9) and which, when the cage closure is closed, extend, as seen in a plan view, along an outwardly curved closure arc between the side gratings (3).

2. Farrowing pen (19) as claimed in claim 1, **characterised in that** the door leaves (10) rotatably mounted on an upright (11) of the cage closure comprise a spring-loaded locking bolt (14) parallel to the pivot axis (9) of said door leaves and cooperating with a latch disc (12) allocated to the upright (11).

3. Farrowing pen (19) as claimed in claim 1 or 2, **characterised in that** the wall portions of the farrowing pen (19) which adjoin the pivoted-out side gratings (3) comprise locking elements (21) for the pivoted-out side gratings (3) of the farrowing cage.

## Revendications

1. Loge de mise bas (19) dotée d'une cage de mise bas qui comprend deux grilles latérales (3) montées de façon pivotante autour d'axes verticaux (5) sur un cadre de tête (1) comportant une auge d'alimentation (2) qui portent sur le côté de la cage opposé au cadre de tête (1), une fermeture de cage à partir de deux grilles de fermeture guidées réglables dans des tubes longitudinaux (15) des grilles latérales (3), **caractérisé en ce que** les grilles de fermeture (8) forment des battants de porte (10) symétriques, pouvant pivoter autour des axes pivotants (9) verticaux, qui, lorsque la cage est fermée, s'étendent dans la vue en plan le long d'un arc final arqué vers l'extérieur entre les grilles latérales (3) .

2. Loge de mise bas (19) selon la revendication 1, **caractérisée en ce que** les battants de porte (10) pouvant pivoter sur un support (11) de la fermeture de cage comportent un boulon de verrouillage (14) sous contrainte d'un ressort, parallèle à leur axe de pivotement (9) qui concoure avec une rondelle d'encliquetage (12) associée au support (11).

3. Loge de mise bas (19) selon la revendication 1 ou 2, **caractérisée en ce que** les sections de paroi de la loge de mise bas (19), adjacentes aux grilles latérales (3) pivotées, comportent des éléments de verrouillage (21) pour les grilles latérales (3) pivotées de la cage de mise bas.
